# EUROPEAN PATENT SPECIFICATION

(11) **EP 3 683 612 B1**
(45) Date of publication and mention of the grant of the patent: **09.10.2024**
(21) Application number: 18871264.0
(22) Date of filing: 28.08.2018
(51) Int. Cl.: G02B 26/08

(54) **MICROMIRROR STRUCTURE AND MICROMIRROR ARRAY CHIP**
MIKROSPIEGELSTRUKTUR UND MIKROSPIEGEL-ARRAYCHIP
STRUCTURE DE MICROMIROIRS ET PUCE DE RÉSEAU DE MICROMIROIRS

(30) Priority: 27.10.2017 CN 201711033201
(43) Date of publication of application: 22.07.2020
(73) Proprietor: Huawei Technologies Co., Ltd., Longgang District Shenzhen, Guangdong 518129 (CN)
(72) Inventor: YAO, Danyang, Shenzhen Guangdong 518129 (CN)
(74) Representative: Goddar, Heinz J.
(86) International application number: PCT/CN2018/102703
(87) International publication number: WO 2019/080633

(56) References cited:
- EP-A1- 3 139 202
- WO-A1-98/44571
- CN-A- 105 223 657
- CN-A- 105 408 788
- CN-A- 106 094 064
- CN-U- 202 720 387
- DE-B3- 102007 001 516
- US-B1- 6 591 029

## Description

### TECHNICAL FIELD

This application relates to a micromirror driving technology, and in particular, to a micromirror structure and a micromirror array chip.

### BACKGROUND

A thermoelectric MEMS (Micro-Electro-Mechanical System, micro-electro-mechanical system) driving technology is a technology of generating driving force through thermal deformation of a material. Compared with another MEMS driving technology, the thermoelectric MEMS driving technology has advantages of strong driving force, a large displacement, and the like, and has a very broad application prospect. Especially in the optical communications field, a thermoelectric MEMS micromirror is manufactured in an array form by using the thermoelectric driving technology, two MEMS micromirror array chips are used to form an optical path, and when an MEMS micromirror on a driving array deflects to a proper position, an OXC (Optical Cross-Connect, optical cross-connect) function of switching communication light from an input port to any output port may be implemented. Because the thermoelectric MEMS micromirror has an advantage of a large deflection angle, assembling of an OXC module having a large port may be supported. In this way, a switching capacity of the OXC module is greatly expanded, to meet a communication data transmission requirement that grows at a high speed.

How to design a micromirror structure that can ensure a more precise position of a micromirror in a deflection process is a direction of continuous research in the industry.

EP 3 139 202 A1 describes an optical switch and a wavelength division multiplexing optical system. The optical switch includes an input port array, an input collimator array, an input micromirror array, an output micromirror array, an output collimator array, and an output port array. All input micromirrors included in the input micromirror array can be deflected in two mutually perpendicular directions.

WO 98/44571 A1 discloses a micromirror device having a thermoelectric actuator.

### SUMMARY

Embodiments of this application provide a micromirror structure, to ensure that a more precise position of a lens is obtained when the lens deflects. The embodiments of this application further provide a micromirror array chip including the micromirror structure.

According to a first aspect, an embodiment of this application provides a micromirror structure, including an outer frame, an inner frame, a lens, a pair of first hinges, a pair of second hinges, a first driver module, and a second driver module. The lens is an MEMS micromirror. The pair of first hinges is respectively located at two opposite ends of the lens, the pair of first hinges is connected between the lens and an inner wall of the inner frame, and a connection line of the pair of first hinges forms a first rotation axis. The pair of second hinges is respectively located at two opposite ends of the inner frame, the pair of second hinges is connected between an outer wall of the inner frame and an inner wall of the outer frame, a connection line of the pair of second hinges forms a second rotation axis, and the first rotation axis is perpendicular to the second rotation axis. The first driver module is connected to the inner frame, to drive the inner frame, together with the lens, to rotate by using the second rotation axis as a center. The second driver module is connected to the lens, to drive the lens to rotate by using the first rotation axis as a center. In this embodiment of this application, the inner frame is disposed between the lens and the outer frame, the pair of first hinges is connected between the inner frame and the lens to form the first rotation axis, the pair of second hinges is connected between the inner frame and the outer frame to from the second rotation axis, and the first rotation axis is perpendicular to the second rotation axis, so that the lens cannot displace in a direction perpendicular to the lens because the lens is constrained by the pair of first hinges when the lens rotates around the first rotation axis, and the lens cannot displace in a direction perpendicular to the lens because the lens is constrained by the pair of second hinges when the lens rotates around the second rotation axis. This can ensure a more precise position of the lens in a deflection process. In addition, a structure used by the lens to rotate around the first rotation axis and a structure used by the lens to rotate around the second rotation axis are independent of each other. Therefore, there is no mechanical crosstalk between deflection around the first rotation axis and deflection around the second rotation axis.

In an implementation, the pair of first hinges implements a rigid connection between the lens and the inner frame in a direction of the first rotation axis, so that no displacement occurs between the inner frame and the lens when the first driver module drives the inner frame, together with the lens, to rotate by using the second rotation axis as a center, thereby ensuring a precise position of the lens. In addition, the pair of first hinges implements the rigid connection between the lens and the inner frame in the direction of the first rotation axis, so that fixedness of a position of the first rotation axis can be determined. If the first hinges are flexibly connected between the lens and the inner frame in the direction of the first rotation axis, when the second driver module drives the lens to rotate by using the first rotation axis as a center, the position of the first rotation axis very easily changes due to elastic deformation of the first hinges (the position change may be referred to as an unwanted offset, and a direction and a displacement of the position change are uncertain). Consequently, the lens is imprecisely positioned.

In an implementation, the pair of second hinges implements a rigid connection between the inner frame and the outer frame in a direction of the second rotation axis, in order that fixedness of a position of the second rotation axis can be determined, so that the lens is precisely positioned when the lens rotates around the second rotation axis.

In a process in which the lens rotates by using the first rotation axis as a center, a deflection position of the lens is maintained through elastic deformation of the pair of first hinges. In other words, in a rotation direction of the first hinges, the first hinges are flexibly connected between the inner frame and the lens.

In a process in which the inner frame, together with the lens, rotates by using the second rotation axis as a center, a deflection position of the inner frame together with the lens is maintained through elastic deformation of the pair of second hinges. In other words, in a rotation direction of the second hinges, the second hinges are flexibly connected between the inner frame and the outer frame.

The first driver module includes a first thermoelectric driving arm, the first thermoelectric driving arm is connected between the outer frame and the inner frame, an end that is of the first thermoelectric driving arm and that is connected to the inner frame is a first connection end, and a center of the first connection end is located on the first rotation axis. When the first thermoelectric driving arm is heated, the first thermoelectric driving arm deforms, so that the first connection end displaces in a direction perpendicular to the lens, wherein the first connection end of the first thermoelectric driving arm is moved to drive the inner frame, together with the lens, to rotate by using the second rotation axis as a center. In this embodiment, the first driver module is designed as a thermoelectric driving arm. When the first thermoelectric driving arm is heated, the first thermoelectric driving arm deforms, so that the first connection end displaces in the direction perpendicular to the lens. The first rotation axis is set to a direction X, the second rotation axis is set to a direction Y, and the direction perpendicular to the lens is a direction Z. In this implementation, the first connection end of the first thermoelectric driving arm is moved in the direction Z, to drive the inner frame, together with the lens, to rotate by using the second rotation axis as a center.

In an implementation, there is one first connection end, and the first connection end is located on the first rotation axis. Specifically, the first thermoelectric driving arm includes a first electrode end, a first elastic arm, and the first connection end, the first electrode end and the first connection end are respectively located on two sides of the first elastic arm, the first electrode end is configured to be electrically connected to a first electrode, to apply a voltage or a current to the first thermoelectric driving arm. Under the action of a voltage difference and a current, the first elastic arm thermally deforms, to drive the first connection end to move in the direction Z. In this implementation, the first elastic arm is in a packaged ring-shaped structure.

In an implementation, there are at least two first connection ends, and the at least two first connection ends are symmetrically distributed by using the first rotation axis as a center, so that a center of the first connection ends is located on the first rotation axis. This is beneficial for the first thermoelectric driving arm to apply uniform force to the inner frame. Specifically, in this implementation, the first thermoelectric driving arm includes a first electrode end, two first elastic arms, and two first connection ends, ends of the two first elastic arms are respectively connected to the two first connection ends, and the other ends of the two first elastic arms are both connected to the first electrode end.

In an implementation, the first driver module further includes the first electrode, the first electrode is disposed on the outer frame, and the first electrode is electrically connected to the first thermoelectric driving arm. Specifically, the first electrode is electrically connected to the first electrode end, the outer frame may be designed as a circuit board, and the first electrode is electrically connected to the first electrode end by using cables on the circuit board.

Specifically, a center of the first electrode end is located on an extension line of the first rotation axis.

The second driver module includes a second thermoelectric driving arm, the second thermoelectric driving arm is connected between the inner frame and the lens, an end that is of the second thermoelectric driving arm and that is connected to the inner frame is a second electrode end, and a center of the second electrode end is located on an extension line of the second rotation axis. An architecture of the second driver module may be the same as that of the first driver module, but only disposing positions are different. The second driver module is disposed between the inner frame and the lens. Specifically, the second thermoelectric driving arm includes the second electrode end, a second connection end, and a second elastic arm connected between the second electrode end and the second connection end, and the second electrode end is connected to the inner frame.

In an implementation, the second driver module further includes a second electrode, the second electrode is disposed on the outer frame, and the second electrode is electrically connected to the second thermoelectric driving arm. Specifically, the second electrode is electrically connected to the second electrode end.

In an implementation, the second electrode end and one of the second hinges are respectively disposed on two sides of the inner frame oppositely, that is, the second electrode end is located on an extension line of the second hinge. In other words, the second hinge is located on the second rotation axis. The second electrode is electrically connected to the second thermoelectric driving arm by using leads, and the leads extend from the outer frame to one of the second hinges, and extend to the second thermoelectric driving arm along the second hinge.

An end that is of the second thermoelectric driving arm and that is connected to the lens is the second connection end, and a center of the second connection end is located on the second rotation axis.

There are at least two second connection ends, and the at least two second connection ends are symmetrically distributed by using the second rotation axis as a center, so that a center of the second connection ends is located on the second rotation axis. In this way, the second driver module can apply uniform force to the lens.

Specifically, the first electrode end is connected to a surface of the outer frame, and the first connection end is connected to a surface of the inner frame. Because a thermoelectric driving arm is additionally made on a surface of a silicon material (the inner frame and a surface of the lens belong to a base structure) by using a semiconductor technology, the first connection end is located on the surface of the inner frame. Likewise, the second electrode end is connected to a surface of the inner frame, and the second connection end is connected to a surface of the lens.

In an implementation, the inner frame is of an axisymmetrical structure, and both the first rotation axis and the second rotation axis form symmetry axes of the inner frame. The inner frame may be of any axisymmetrical structure, for example, in a square frame shape or in a circular ring shape.

According to a second aspect, an embodiment of this application provides a micromirror array chip, including a plurality of micromirror structures, distributed in arrays, according to any one of the foregoing implementations.

The micromirror array chip is divided into a plurality of areas distributed in arrays, the plurality of areas distributed in arrays include a first area and a second area that are disposed adjacent to each other, a distribution direction of the micromirror structure in the first area is mirror-symmetric to a distribution direction of the micromirror structure in the second area.

### BRIEF DESCRIPTION OF DRAWINGS

FIG. 1 is a schematic structural diagram of a 3D-MEMS optical switching module on which a micromirror array chip is located according to this application;
FIG. 2 is a schematic diagram of a micromirror structure according to an implementation of this application;
FIG. 3 is a schematic diagram of a micromirror structure according to another implementation of this application;
FIG. 4 is a schematic diagram of a micromirror array chip layout manner according to an implementation of this application; and
FIG. 5 is a diagram of a relationship between a deflection angle and power consumption of a micromirror array chip according to an implementation of this application.

### DESCRIPTION OF EMBODIMENTS

The following describes the embodiments of this application with reference to the accompanying drawings in the embodiments of this application.

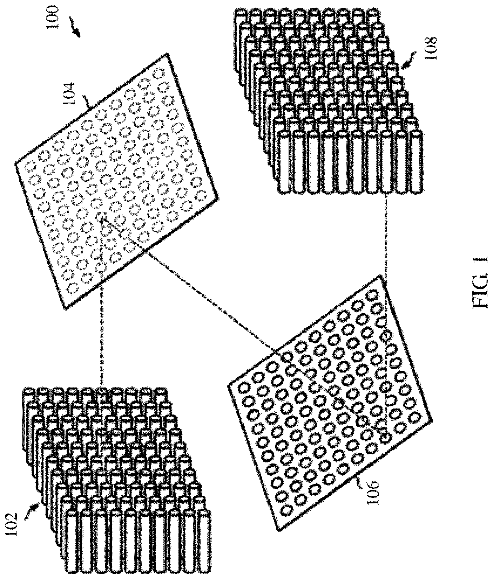

This application relates to a micromirror structure and a micromirror array chip that are core devices in the optical switching field. FIG. 1 is a schematic structural diagram of a 3D-MEMS optical switching module (namely, an MEMS photonic switch 100) on which a micromirror array chip is located according to this application. The MEMS photonic switch 100 includes a first lens array 104 and a second lens array 106. Light enters through a collimator array 102 (for example, light is led from an optical fiber), and is projected on a micromirror in the first lens array 104. An angle of the micromirror in the first lens array 104 is adjusted, to enable the light to be further projected on a proper micromirror in the second lens array 106. The micromirror in the second lens array 106 is associated with a specific output port in a collimator array 108. An angle of the micromirror in the lens array 106 is adjusted, to enable the micromirror in the lens array 106 to be coupled to a proper output port in the collimator array 108. Then, the light is emitted from a collimator in the collimator array 108 (for example, coupled to an optical fiber). Similarly, light may be input from one side of the collimator array 108, reflected from a micromirror in the second lens array 106 to a micromirror in the first lens array 104, further reflected to the collimator array 102, and emitted. The micromirror structure and the micromirror array chip that are provided in this application are applied to the first lens array 104 or the second lens array 106.

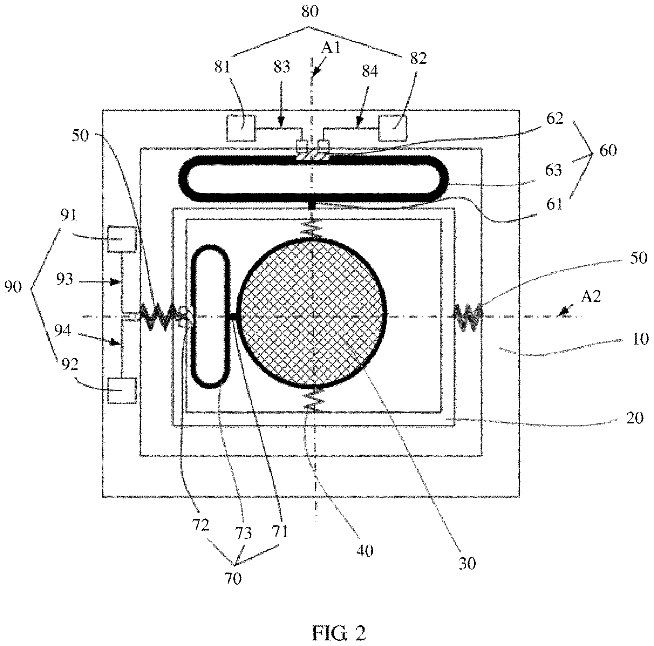

Referring to FIG. 2, a micromirror structure provided in an embodiment of this application includes an outer frame 10, an inner frame 20, a lens 30, a pair of first hinges 40, a pair of second hinges 50, a first driver module, and a second driver module. The lens 30 is located in enclosed space of the inner frame 20, and the inner frame 20 is located in enclosed space of the outer frame 10. The lens 30, the inner frame 20, and the outer frame 10 form a layer-by-layer nesting architecture, and a gap is maintained between the lens 30, the inner frame 20, and the outer frame 10, to accommodate the first hinges 40, the second hinges 50, the first driver module, and the second driver module. In a specific implementation, the outer frame 10 may be formed by digging a hole on a base board, and a material of the outer frame 10 may be a silicon material. The enclosed space of the outer frame 10 may be rectangular. A plurality of accommodation holes distributed in arrays may be disposed on one base board. These accommodation holes are used as the enclosed space of the outer frame 10. The inner frame 20, the lens 30, the first hinges 40, the second hinges 50, the first driver module, and the second driver module are disposed in the accommodation holes.

The inner frame 20 is of an enclosed ring-shaped structure, and may be of an axisymmetrical structure, for example, in a rectangular shape or a circular shape (it may be understood that a shape of the inner frame 20 may be any other shape and is not limited in this application). A material of the inner frame 20 may be the same as the material of the outer frame 10, and the inner frame 20 is of a rigid structure.

The pair of first hinges 40 is respectively located at two opposite ends of the lens 30, the pair of first hinges 40 is connected between the lens 30 and an inner wall of the inner frame 20, and a connection line of the pair of first hinges 40 forms a first rotation axis A1. The first hinges 40 are of a structure similar to a rotation axis or hinge, and can implement rotation of the lens 30 relative to the inner frame 20. In a direction other than a rotation direction, the first hinges 40 can ensure a rigid connection between the lens 30 and the inner frame 20, to prevent the lens 30 from offsetting relative to the inner frame 20, thereby ensuring deflection precision of the lens 30.

The pair of second hinges 50 is respectively located at two opposite ends of the inner frame 20, the pair of second hinges 50 is connected between an outer wall of the inner frame 20 and an inner wall of the outer frame 10, a connection line of the pair of second hinges 50 forms a second rotation axis A2, and the first rotation axis A1 is perpendicular to the second rotation axis A2. The second hinges 50 are of a structure similar to a rotation axis or hinge, and can implement rotation of the inner frame 20 relative to the outer frame 10. In a direction other than a rotation direction, the second hinges 50 can ensure a rigid connection between the inner frame 20 and the outer frame 10, to prevent the inner frame 20 from offsetting relative to the outer frame 10, thereby ensuring deflection precision of the lens 30.

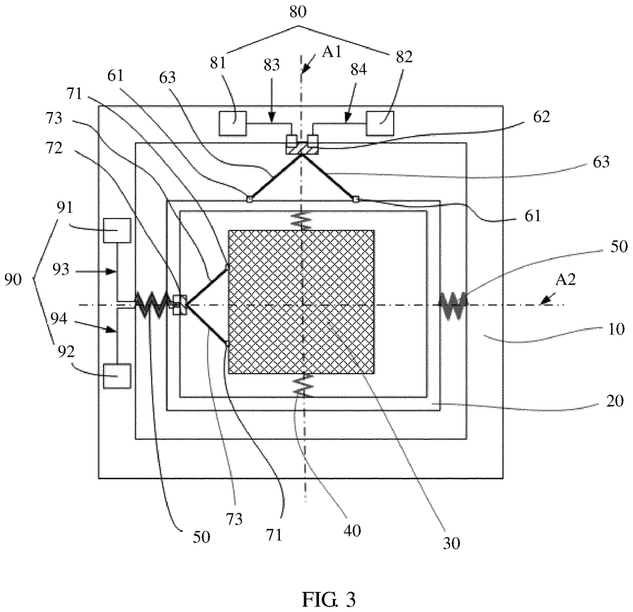

Specifically, the inner frame 20 is of an axisymmetrical structure, and both the first rotation axis A1 and the second rotation axis A2 form symmetry axes of the inner frame 20. The inner frame 20 may be of any axisymmetrical structure, for example, in a square frame shape or in a circular ring shape. In embodiments shown in FIG. 2 and FIG. 3, the inner frame 20 is in a rectangular frame shape, and includes four sides perpendicular to each other, and the first rotation axis A1 and the second rotation axis A2 each are a midline of two adjacent sides.

In an implementation, the lens 30 is an MEMS micromirror, and the lens 30 is circular. In another implementation, the lens 30 may be rectangular. When the lens 30 is circular, the first rotation axis A1 coincides with a diameter of the lens 30. When the lens 30 is square, the first rotation axis A1 coincides with a midline of the lens 30. It should be understood that the lens 30 may be in any shape. This is not limited in this application.

The first driver module is connected to the inner frame 20, to drive the inner frame 20, together with the lens 30, to rotate by using the second rotation axis A2 as a center. The second driver module is connected to the lens 30, to drive the lens 30 to rotate by using the first rotation axis A1 as a center. In this embodiment of this application, the inner frame 20 is disposed between the lens 30 and the outer frame 10, the pair of first hinges 40 is connected between the inner frame 20 and the lens 30 to form the first rotation axis A1, the pair of second hinges 50 is connected between the inner frame 20 and the outer frame 10 to from the second rotation axis A2, and the first rotation axis A1 is perpendicular to the second rotation axis A2, so that the lens 30 cannot displace in a direction perpendicular to the lens 30 because the lens 30 is constrained by the pair of first hinges 40 when the lens 30 rotates around the first rotation axis A1, and the lens 30 cannot displace in the direction perpendicular to the lens 30 because the lens 30 is constrained by the pair of second hinges 50 when the lens 30 rotates around the second rotation axis A2. This can ensure that the lens 30 is more precisely positioned in a deflection process.

In an implementation, the pair of first hinges 40 implements a rigid connection between the lens 30 and the inner frame 20 in a direction of the first rotation axis A1, so that no displacement occurs between the inner frame 20 and the lens 30 when the first driver module drives the inner frame 20, together with the lens 30, to rotate by using the second rotation axis A2 as a center, thereby ensuring a precise position of the lens 30. In addition, the pair of first hinges 40 implements the rigid connection between the lens 30 and the inner frame 20 in the direction of the first rotation axis A1, so that fixedness of a position of the first rotation axis A1 can be determined. If the first hinges 40 are flexibly connected between the lens 30 and the inner frame 20 in the direction of the first rotation axis A1, when the second driver module drives the lens 30 to rotate by using the first rotation axis A1 as a center, the position of the first rotation axis A1 very easily changes due to elastic deformation of the first hinges 40 (the position change may be referred to as an unwanted offset, and a direction and a displacement of the position change are uncertain). Consequently, the lens 30 is imprecisely positioned.

In an implementation, the pair of second hinges 50 implements a rigid connection between the inner frame 20 and the outer frame 10 in a direction of the second rotation axis A2, in order that fixedness of a position of the second rotation axis A2 can be determined, so that the lens 30 is precisely positioned when the lens 30 rotates around the second rotation axis A2.

In a process in which the lens 30 rotates by using the first rotation axis A1 as a center, a deflection position of the lens 30 is maintained through elastic deformation of the pair of first hinges 40. In other words, in a rotation direction of the first hinges 40, the first hinges 40 are flexibly connected between the inner frame 20 and the lens 30.

In a process in which the inner frame 20, together with the lens 30, rotates by using the second rotation axis A2 as a center, a deflection position of the inner frame 20 together with the lens 30 is maintained through elastic deformation of the pair of second hinges 50. In other words, in a rotation direction of the second hinges 50, the second hinges 50 are flexibly connected between the inner frame 20 and the outer frame 10.

The first driver module and the second driver module are configured to drive the lens 30 to deflect. In this embodiment of this application, the lens 30 is driven to deflect in a thermoelectric driving manner. Specific descriptions are as follows:

In an implementation, the first driver module includes a first thermoelectric driving arm 60, the first thermoelectric driving arm 60 is connected between the outer frame 10 and the inner frame 20, an end that is of the first thermoelectric driving arm 60 and that is connected to the inner frame 20 is a first connection end 61, and a center of the first connection end 61 is located on the first rotation axis A1. In this embodiment, the first driver module is designed as a thermoelectric driving arm. When the first thermoelectric driving arm 60 is heated, the first thermoelectric driving arm 60 deforms, so that the first connection end 61 displaces in the direction perpendicular to the lens 30. The first rotation axis A1 is set to a direction X, the second rotation axis A2 is set to a direction Y, and the direction perpendicular to the lens 30 is a direction Z. In this implementation, the first connection end 61 of the first thermoelectric driving arm 60 is moved in the direction Z, to drive the inner frame 20, together with the lens 30, to rotate by using the second rotation axis A2 as a center.

In an implementation, as shown in FIG. 2, there is one first connection end 61, and the first connection end 61 is located on the first rotation axis A1. Specifically, the first thermoelectric driving arm 60 includes a first electrode end 62, a first elastic arm 63, and the first connection end 61, the first electrode end 62 and the first connection end 61 are respectively located on two sides of the first elastic arm 63, the first electrode end 62 is configured to be electrically connected to a first electrode 80 disposed on the outer frame 10, to apply a voltage or a current to the first thermoelectric driving arm 60. Under the action of a voltage difference and a current, the first elastic arm 63 thermally deforms, to drive the first connection end 61 to move in the direction Z. In this implementation, the first elastic arm 63 is in a packaged ring-shaped structure.

In an implementation, as shown in FIG. 3, there are at least two first connection ends 61, and the at least two first connection ends 61 are symmetrically distributed by using the first rotation axis A1 as a center, so that a center of the first connection ends 61 is located on the first rotation axis A1. This is beneficial for the first thermoelectric driving arm 60 to apply uniform force to the inner frame 20. Specifically, in this implementation, the first thermoelectric driving arm 60 includes a first electrode end 62, two first elastic arms 63, and two first connection ends 61, ends of the two first elastic arms 63 are respectively connected to the two first connection ends 61, and the other ends of the two first elastic arms 63 are both connected to the first electrode end 62.

In an implementation, the first driver module further includes the first electrode 80, the first electrode 80 is disposed on the outer frame 10, and the first electrode 80 is electrically connected to the first thermoelectric driving arm 60. Specifically, the first electrode 80 is electrically connected to the first electrode end 62, the outer frame 10 may be designed as a circuit board, and the first electrode 80 is connected to the first electrode end 62 by using cables 83 and 84 on the circuit board.

Specifically, a center of the first electrode end 62 is located on an extension line of the first rotation axis A1. The first electrode 80 includes a positive electrode 81 and a negative electrode 82, and the first thermoelectric driving arm 60 is connected in series between the positive electrode 81 and the negative electrode 82, to form a loop. The first electrode 80 applies a voltage or a current to the first thermoelectric driving arm 60, so that the first elastic arm 63 thermally deforms, and an end that is of the first elastic arm 63 and that is connected to the first connection end 61 moves in the direction Z. Specifically, a material of the first elastic arm 63 includes a multilayer metal film and a dielectric film, includes two materials that are used to generate displacement and that have different thermal expansion coefficients, for example, Cu and SiO2 (or Al and SiO2), and also includes a heating resistor layer used to generate temperature, for example, W, Ti, Pt, or polycrystalline silicon. Two ends of the heating resistor layer are respectively electrically connected to the positive electrode 81 and the negative electrode 82. When power is injected into the first electrode 80, heat is generated on the heating resistor layer to cause a temperature change. Because the two materials having the different thermal expansion coefficients exist on the first elastic arm 63, an expansion difference between the two materials changes, causing a change in a deformation of the first elastic arm 63. Consequently, the first connection end 61 displaces.

The first electrode end 62 includes two terminals respectively electrically connected to the positive electrode 81 and the negative electrode 82. When there are one first elastic arm 63 and one first connection end 61, the first elastic arm 63 continuously extends between the two terminals of the first electrode end 62, and the first connection end 61 is located at a midpoint of the first elastic arm 63. When there are two first elastic arms 63 and two first connection ends 61, one of the first elastic arms 63 is connected between one of the terminals and one of the first connection ends 61, and the other first elastic arm 63 is connected between the other terminal and the other first connection end 61.

The second driver module includes a second thermoelectric driving arm 70, the second thermoelectric driving arm 70 is connected between the inner frame 20 and the lens 30, an end that is of the second thermoelectric driving arm 70 and that is connected to the inner frame 20 is a second electrode end 72, and a center of the second electrode end 72 is located on an extension line of the second rotation axis A2. Specifically, the second thermoelectric driving arm 70 includes the second electrode end 72, a second connection end 71, and a second elastic arm 73 connected between the second electrode end 72 and the second connection end 71, the second electrode end 72 is connected to the inner frame 20, and the second connection end 71 is connected to the lens 30. An architecture of the second driver module may be the same as that of the first driver module, but only disposing positions are different. The second driver module is disposed between the inner frame 20 and the lens 30.

In an implementation, the second driver module further includes a second electrode 90, the second electrode 90 is disposed on the outer frame 10, and the second electrode 90 is electrically connected to the second thermoelectric driving arm 70. Specifically, the second electrode 90 is electrically connected to the second electrode end 72. The second electrode 90 also includes a positive electrode 91 and a negative electrode 92, and the second electrode end 72 also includes two terminals. Respectively by using leads, the positive electrode 91 of the second electrode 90 is electrically connected to one terminal of the second electrode end 72, and the negative electrode 92 of the second electrode 90 is electrically connected to the other terminal of the second electrode end 72.

In an implementation, the second electrode end 72 and one of the second hinges 50 are respectively disposed on two sides of the inner frame 20 oppositely, that is, the second electrode end 72 is located on an extension line of the second hinge 50. In other words, the second hinge 50 is located on the second rotation axis A2. The second electrode 90 is electrically connected to the second thermoelectric driving arm 70 by using leads 93 and 94, and the leads 93 and 94 extend from the outer frame 10 to one of the second hinges 50, and extend to the second thermoelectric driving arm 70 along the second hinge 50.

In an implementation, an end that is of the second thermoelectric driving arm 70 and that is connected to the lens 30 is the second connection end 71, and the center of the second connection end 71 is located on the second rotation axis A2, so that more uniform force can be applied to the lens 30.

In an implementation, as shown in FIG. 3, there are at least two second connection ends 71, and the at least two second connection ends 71 are symmetrically distributed by using the second rotation axis A2 as a center, so that a center of the second connection ends 71 is located on the second rotation axis A1. Correspondingly, there are at least two second elastic arms 73, and the at least two second elastic arms 73 are respectively connected between the at least two second connection ends 71 and the second electrode end 72. In this way, the second driver module can apply uniform force to the lens 30.

Specifically, the first electrode end 62 is connected to a surface of the outer frame 10, and the first connection end 61 is connected to a surface of the inner frame 20. Because a thermoelectric driving arm is additionally made on a surface of a silicon material (the inner frame 20 and the lens 30 belong to a base structure) by using a semiconductor technology, the first connection end 61 is located on the surface of the inner frame 20. Likewise, the second electrode end 72 is connected to a surface of the inner frame 20, and the second connection end 71 is connected to a surface of the lens 30.

An embodiment of this application provides a micromirror array chip, including a plurality of micromirror structures distributed in arrays. Specifically, outer frames 10 of all the micromirror structures are interconnected as a whole, a plurality of accommodation holes distributed in arrays may be disposed on a same base board, and one inner frame 20 and one lens 30 are disposed in each accommodation hole.

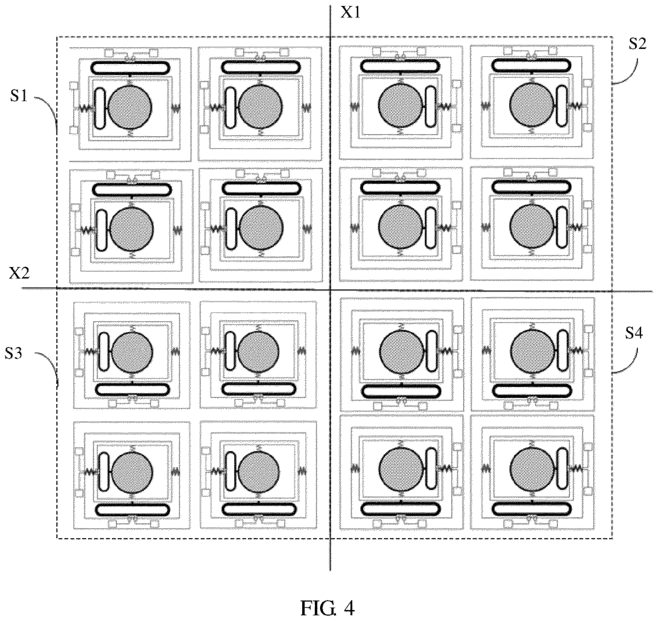

In an implementation, the micromirror array chip is divided into a plurality of areas distributed in arrays, the plurality of areas distributed in arrays include a first area and a second area that are disposed adjacent to each other, a distribution direction of the micromirror structure in the first area is mirror-symmetric to a distribution direction of the micromirror structure in the second area. Each area may include a plurality of micromirror structures distributed in an array. Referring to FIG. 4, the micromirror array chip is divided into four areas S1, S2, S3, and S4. Areas adjacent to the area S1 are the area S2 and the area S3. A distribution direction of the micromirror structure in the area S1 is mirror-symmetric to a distribution direction of the micromirror structure in the area S2 by using a first boundary line X1 as a center, and the first boundary line X1 is located between the areas S1 and S2. The distribution direction of the micromirror structure in the area S1 is mirror-symmetric to a distribution direction of the micromirror structure in the area S3 by using a second boundary line X2 as a center, and the second boundary line X2 is located between the areas S1 and S3. The first boundary line X1 is perpendicular to the second boundary line X2. Micromirror structures in each of the areas S1, S2, S3, and S4 are distributed in a 2x2 array.

The micromirror array chip may be divided into more areas, and is not limited to the four areas S1, S2, S3, and S4, and the micromirror structures in each area may be alternatively distributed in another array layout, for example, distributed in a 3x3 array, or distributed in a 4x4 array.

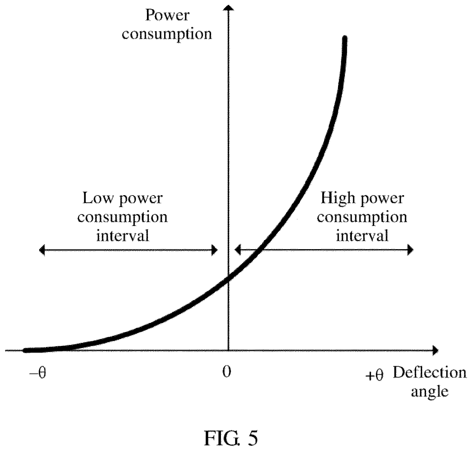

Referring to FIG. 5, it can be seen from a diagram of a relationship between a deflection angle and power consumption of a lens, there is an area with low power consumption for the deflection angle of the lens. In the implementation shown in FIG. 4, deflection angles of lenses of micromirror structures in the four areas S1, S2, S3, and S4 all need to be in a low power consumption state. Therefore, in this embodiment of this application, a micromirror array chip layout with low power consumption can be implemented.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A micromirror structure, comprising an outer frame (10), an inner frame (20), a lens (30), a pair of first hinges (40), a pair of second hinges (50), a first driver module, and a second driver module, wherein the lens (30) is a MEMS micromirror, wherein the pair of first hinges (40) is respectively located at two opposite ends of the lens (30), the pair of first hinges (40) is connected between the lens (30) and an inner wall of the inner frame (20), and a connection line of the pair of first hinges (40) forms a first rotation axis (A1); the pair of second hinges (50) is respectively located at two opposite ends of the inner frame (20), the pair of second hinges (50) is connected between an outer wall of the inner frame (20) and an inner wall of the outer frame (10), a connection line of the pair of second hinges (50) forms a second rotation axis (A2), and the first rotation axis (A1) is perpendicular to the second rotation axis (A2); the first driver module is connected to the inner frame (20), to drive the inner frame (20), together with the lens (30), to rotate by using the second rotation axis (A2) as a center; and the second driver module is connected to the lens (30), to drive the lens (30) to rotate by using the first rotation axis (A1) as a center,
**characterized in that**
the first driver module comprises a first thermoelectric driving arm (60), the first thermoelectric driving arm (60) is connected between the outer frame (10) and the inner frame (20), an end that is of the first thermoelectric driving arm (60) and that is connected to the inner frame (20) is a first connection end (61), and a center of the first connection end (61) is located on the first rotation axis (A1), wherein when the first thermoelectric driving arm (60) is heated, the first thermoelectric driving arm (60) deforms, so that the first connection end (61) displaces in a direction perpendicular to the lens (30), wherein the first connection end (61) of the first thermoelectric driving arm (60) is moved to drive the inner frame (20), together with the lens 30, to rotate by using the second rotation axis (A2) as a center.

2. The micromirror structure according to claim 1, wherein the pair of first hinges (40) implements a rigid connection between the lens (30) and the inner frame (20) in a direction of the first rotation axis (A1) and/or the pair of second hinges (50) implements a rigid connection between the inner frame (20) and the outer frame (10) in a direction of the second rotation axis (A2).

3. The micromirror structure according to claim 1, wherein there is one first connection end (61), and the first connection end (61) is located on the first rotation axis (A1).

4. The micromirror structure according to claim 1, wherein there are at least two first connection ends (61), and the at least two first connection ends (61) are symmetrically distributed by using the first rotation axis (A1) as a center, so that a center of the first connection ends (61) is located on the first rotation axis (A1).

5. The micromirror structure according to claim 1, wherein the first driver module further comprises a first electrode (80), the first electrode (80) is disposed on the outer frame (10), and the first electrode (80) is electrically connected to the first thermoelectric driving arm (60).

6. The micromirror structure according to claim 5, wherein the first thermoelectric driving arm (60) further comprises a first electrode end (62) and a first elastic arm (63), the first electrode end (62) is electrically connected to the first electrode (80), the first elastic arm (63) is connected between the first electrode end (62) and the first connection end (61), and a center of the first electrode end (62) is located on an extension line of the first rotation axis (A1).

7. The micromirror structure according to any one of claims 1 or 3 to 6, wherein the second driver module comprises a second thermoelectric driving arm (70), the second thermoelectric driving arm (70) is connected between the inner frame (20) and the lens (30), an end that is of the second thermoelectric driving arm (70) and that is connected to the inner frame (20) is a second electrode end (72), and a center of the second electrode end (72) is located on an extension line of the second rotation axis (A2).

8. The micromirror structure according to claim 7, wherein the second driver module further comprises a second electrode (90), the second electrode (90) is disposed on the outer frame (10), and the second electrode (90) is electrically connected to the second electrode end (72).

9. The micromirror structure according to claim 8, wherein the second electrode (90) is electrically connected to the second electrode end (72) by using leads, and the leads extend from the outer frame (10) to one of the second hinges (50), and extend to the second electrode end (72) along the second hinge (50).

10. The micromirror structure according to claim 6, wherein an end that is of the second thermoelectric driving arm (70) and that is connected to the lens (30) is a second connection end (71), and a center of the second connection end (71) is located on the second rotation axis (A2).

11. The micromirror structure according to claim 10, wherein there are at least two second connection ends (71), and the at least two second connection ends (71) are symmetrically distributed by using the second rotation axis (A2) as a center, so that a center of the second connection ends (71) is located on the second rotation axis (A2).

12. The micromirror structure according to claim 11, wherein the second thermoelectric driving arm (70) comprises at least two second elastic arms (73), ends of all the second elastic arms (73) are all connected to the second electrode end (72), and the other ends of the at least two second elastic arms (73) are connected to the at least two second connection ends (72) in a one-to-one correspondence manner.

13. The micromirror structure according to claim 1, wherein the inner frame (20) is of an axisymmetrical structure, and both the first rotation axis (A1) and the second rotation axis (A2) form symmetry axes of the inner frame (20).

14. A micromirror array chip, comprising a plurality of micromirror structures, distributed in arrays, according to any one of claims 1 to 13.

15. The micromirror array chip according to claim 14, wherein the micromirror array chip comprises a plurality of areas distributed in arrays, the plurality of areas distributed in arrays comprise a first area and a second area that are disposed adjacent to each other, a distribution direction of the micromirror structure in the first area is mirror-symmetric to a distribution direction of the micromirror structure in the second area.

## Patentansprüche

1. Mikrospiegelstruktur, die einen äußeren Rahmen (10), einen inneren Rahmen (20), eine Linse (30), ein Paar erster Gelenke (40), ein Paar zweiter Gelenke (50), ein erstes Antriebsmodul und ein zweites Antriebsmodul umfasst, wobei die Linse (30) ein MEMS-Mikrospiegel ist, wobei sich das Paar erster Gelenke (40) jeweils an zwei gegenüberliegenden Enden der Linse (30) befindet, das Paar erster Gelenke (40) zwischen der Linse (30) und einer Innenwand des inneren Rahmens (20) verbunden ist und eine Verbindungslinie des Paares erster Gelenke (40) eine erste Drehachse (Al) bildet; sich das Paar zweiter Gelenke (50) jeweils an zwei gegenüberliegenden Enden des inneren Rahmens (20) befindet, das Paar zweiter Gelenke (50) zwischen einer Außenwand des inneren Rahmens (20) und einer Innenwand des äußeren Rahmens (10) verbunden ist, eine Verbindungslinie des Paars zweiter Gelenke (50) eine zweite Drehachse (A2) bildet, und die erste Drehachse (Al) senkrecht zur zweiten Drehachse (A2) ist; das erste Antriebsmodul mit dem inneren Rahmen (20) verbunden ist, um den inneren Rahmen (20) zusammen mit der Linse (30) zum Drehen unter Verwendung der zweiten Drehachse (A2) als Zentrum anzutreiben; und das zweite Antriebsmodul mit der Linse (30) verbunden ist, um die Linse (30) zum Drehen unter Verwendung der ersten Drehachse (A1) als Zentrum anzutreiben,
**dadurch gekennzeichnet, dass**
das erste Antriebsmodul einen ersten thermoelektrischen Antriebsarm (60) umfasst, der erste thermoelektrische Antriebsarm (60) zwischen dem äußeren Rahmen (10) und dem inneren Rahmen (20) verbunden ist, ein Ende des ersten thermoelektrischen Antriebsarms (60), das mit dem inneren Rahmen (20) verbunden ist, ein erstes Verbindungsende (61) ist, und sich eine Mitte des ersten Verbindungsendes (61) auf der ersten Drehachse (Al) befindet, wobei dann, wenn der erste thermoelektrische Antriebsarm (60) erwärmt wird, sich der erste thermoelektrische Antriebsarm (60) verformt, so dass sich das erste Verbindungsende (61) in einer Richtung senkrecht zu der Linse (30) verlagert, wobei das erste Verbindungsende (61) des ersten thermoelektrischen Antriebsarms (60) zusammen mit der Linse (30) bewegt wird, um den inneren Rahmen (20) zum Drehen unter Verwendung der zweiten Drehachse (A2) als Zentrum anzutreiben.

2. Mikrospiegelstruktur nach Anspruch 1, wobei das Paar erster Gelenke (40) eine starre Verbindung zwischen der Linse (30) und dem inneren Rahmen (20) in Richtung der ersten Drehachse (A1) implementiert und/oder das Paar zweiter Gelenke (50) eine starre Verbindung zwischen dem inneren Rahmen (20) und dem äußeren Rahmen (10) in Richtung der zweiten Drehachse (A2) implementiert.

3. Mikrospiegelstruktur nach Anspruch 1, wobei ein erstes Verbindungsende (61) vorhanden ist und sich das erste Verbindungsende (61) auf der ersten Drehachse (A1) befindet.

4. Mikrospiegelstruktur nach Anspruch 1, wobei wenigstens zwei erste Verbindungsenden (61) vorhanden sind und die wenigstens zwei ersten Verbindungsenden (61) unter Verwendung der ersten Drehachse (A1) als Zentrum symmetrisch verteilt sind, so dass sich eine Mitte der ersten Verbindungsenden (61) auf der ersten Drehachse (Al) befindet.

5. Mikrospiegelstruktur nach Anspruch 1, wobei das erste Antriebsmodul ferner eine erste Elektrode (80) umfasst, die erste Elektrode (80) auf dem äußeren Rahmen (10) angeordnet ist und die erste Elektrode (80) mit dem ersten thermoelektrischen Antriebsarm (60) elektrisch verbunden ist.

6. Mikrospiegelstruktur nach Anspruch 5, wobei der erste thermoelektrische Antriebsarm (60) ferner ein erstes Elektrodenende (62) und einen ersten elastischen Arm (63) umfasst, das erste Elektrodenende (62) mit der ersten Elektrode (80) elektrisch verbunden ist, der erste elastische Arm (63) zwischen dem ersten Elektrodenende (62) und dem ersten Verbindungsende (61) verbunden ist und sich eine Mitte des ersten Elektrodenendes (62) auf einer Verlängerungslinie der ersten Drehachse (A1) befindet.

7. Mikrospiegelstruktur nach einem der Ansprüche 1 oder 3 bis 6, wobei das zweite Antriebsmodul einen zweiten thermoelektrischen Antriebsarm (70) umfasst, der zweite thermoelektrische Antriebsarm (70) zwischen dem inneren Rahmen (20) und der Linse (30) verbunden ist, ein Ende, das zum zweiten thermoelektrischen Antriebsarms (70) gehört und das mit dem inneren Rahmen (20) verbunden ist, ein zweites Elektrodenende (72) ist und sich eine Mitte des zweiten Elektrodenendes (72) auf einer Verlängerungslinie der zweiten Drehachse (A2) befindet.

8. Mikrospiegelstruktur nach Anspruch 7, wobei das zweite Antriebsmodul ferner eine zweite Elektrode (90) umfasst, die zweite Elektrode (90) auf dem äußeren Rahmen (10) angeordnet ist und die zweite Elektrode (90) mit dem zweiten Elektrodenende (72) elektrisch verbunden ist.

9. Mikrospiegelstruktur nach Anspruch 8, wobei die zweite Elektrode (90) mit dem zweiten Elektrodenende (72) unter Verwendung von Leitungen elektrisch verbunden ist und sich die Leitungen von dem äußeren Rahmen (10) zu einem der zweiten Gelenke (50) erstrecken und sich zu dem zweiten Elektrodenende (72) entlang des zweiten Gelenks (50) erstrecken.

10. Mikrospiegelstruktur nach Anspruch 6, wobei ein Ende, das zum zweiten thermoelektrischen Antriebsarms (70) gehört und das mit der Linse (30) verbunden ist, ein zweites Verbindungsende (71) ist und sich eine Mitte des zweiten Verbindungsendes (71) auf der zweiten Drehachse (A2) befindet.

11. Mikrospiegelstruktur nach Anspruch 10, wobei wenigstens zwei zweite Verbindungsenden (71) vorhanden sind und die wenigstens zwei zweiten Verbindungsenden (71) unter Verwendung der zweiten Drehachse (A2) als Zentrum symmetrisch verteilt sind, so dass sich eine Mitte der zweiten Verbindungsenden (71) auf der zweiten Drehachse (A2) befindet.

12. Mikrospiegelstruktur nach Anspruch 11, wobei der zweite thermoelektrische Antriebsarm (70) wenigstens zwei zweite elastische Arme (73) umfasst, die Enden aller zweiten elastischen Arme (73) alle mit dem zweiten Elektrodenende (72) verbunden sind und die anderen Enden der wenigstens zwei zweiten elastischen Arme (73) mit den wenigstens zwei zweiten Verbindungsenden (72) in einer Eins-zu-Eins-Entsprechung verbunden sind.

13. Mikrospiegelstruktur nach Anspruch 1, wobei der innere Rahmen (20) eine achsensymmetrische Struktur aufweist und sowohl die erste Drehachse (A1) als auch die zweite Drehachse (A2) Symmetrieachsen des inneren Rahmens (20) bilden.

14. Mikrospiegel-Array-Chip, der mehrere in Arrays verteilte Mikrospiegelstrukturen nach einem der Ansprüche 1 bis 13 umfasst.

15. Mikrospiegel-Array-Chip nach Anspruch 14, wobei der Mikrospiegel-Array-Chip mehrere in Arrays verteilte Bereiche umfasst, wobei die mehreren in Arrays verteilten Bereiche einen ersten Bereich und einen zweiten Bereich umfassen, die benachbart zueinander angeordnet sind, wobei eine Verteilungsrichtung der Mikrospiegelstruktur in dem ersten Bereich spiegelsymmetrisch zu einer Verteilungsrichtung der Mikrospiegelstruktur in dem zweiten Bereich ist.

## Revendications

1. Structure de micromiroir, comprenant un cadre externe (10), un cadre interne (20), une lentille (30), une paire de premières charnières (40), une paire de deuxièmes charnières (50), un premier module d'entraînement, et un deuxième module d'entraînement, la lentille (30) étant un micromiroir MEMS, la paire de premières charnières (40) étant situées respectivement à deux extrémités opposées de la lentille (30), la paire de premières charnières (40) étant liées entre la lentille (30) et une paroi interne du cadre interne (20), et une ligne de liaison de la paire de premières charnières (40) formant un premier axe de rotation (A1) ; la paire de deuxièmes charnières (50) étant situées respectivement à deux extrémités opposées du cadre interne (20), la paire de deuxièmes charnières (50) étant liées entre une paroi externe du cadre interne (20) et une paroi interne du cadre externe (10), une ligne de liaison de la paire de deuxièmes charnières (50) formant un deuxième axe de rotation (A2), et le premier axe de rotation (A1) étant perpendiculaire au deuxième axe de rotation (A2) ; le premier module d'entraînement étant lié au cadre interne (20) pour entraîner le cadre interne (20), conjointement avec la lentille (30), en rotation avec pour centre le deuxième axe de rotation (A2) ; et le deuxième module d'entraînement étant lié à la lentille (30) pour entraîner la lentille (30) en rotation avec pour centre le premier axe de rotation (A1),
**caractérisée en ce que**
le premier module d'entraînement comprend un premier bras d'entraînement thermoélectrique (60), le premier bras d'entraînement thermoélectrique (60) étant lié entre le cadre externe (10) et le cadre interne (20), une extrémité qui est celle du premier bras d'entraînement thermoélectrique (60) et qui est liée au cadre interne (20) étant une première extrémité de liaison (61), et un centre de la première extrémité de liaison (61) étant situé sur le premier axe de rotation (A1) ; lorsque le premier bras d'entraînement thermoélectrique (60) est chauffé, le premier bras d'entraînement thermoélectrique (60) se déformant de sorte que la première extrémité de liaison (61) se déplace dans une direction perpendiculaire à la lentille (30), le mouvement de la première extrémité de liaison (61) du premier bras d'entraînement thermoélectrique (60) entraînant le cadre interne (20), conjointement avec la lentille (30), en rotation avec pour centre le deuxième axe de rotation (A2).

2. Structure de micromiroir selon la revendication 1, la paire de premières charnières (40) réalisant une liaison rigide entre la lentille (30) et le cadre interne (20) dans une direction du premier axe de rotation (A1) et/ou la paire de deuxièmes charnières (50) réalisant une liaison rigide entre le cadre interne (20) et le cadre externe (10) dans une direction du deuxième axe de rotation (A2).

3. Structure de micromiroir selon la revendication 1, une seule première extrémité de liaison (61) étant prévue, et la première extrémité de liaison (61) étant située sur le premier axe de rotation (A1).

4. Structure de micromiroir selon la revendication 1, au moins deux premières extrémités de liaison (61) étant prévues, et les au moins deux premières extrémités de liaison (61) étant réparties symétriquement avec pour centre le premier axe de rotation (A1), de sorte qu'un centre des premières extrémités de liaison (61) se situe sur le premier axe de rotation (A1).

5. Structure de micromiroir selon la revendication 1, le premier module d'entraînement comprenant en outre une première électrode (80), la première électrode (80) étant agencée sur le cadre externe (10), et la première électrode (80) étant liée électriquement au premier bras d' entraînement thermoélectrique (60).

6. Structure de micromiroir selon la revendication 5, le premier bras d'entraînement thermoélectrique (60) comprenant en outre une première extrémité d'électrode (62) et un premier bras élastique (63), la première extrémité d'électrode (62) étant liée électriquement à la première électrode (80), le premier bras élastique (63) étant lié entre la première extrémité d'électrode (62) et la première extrémité de liaison (61), et un centre de la première extrémité d'électrode (62) étant situé sur une ligne de prolongement du premier axe de rotation (A1).

7. Structure de micromiroir selon l'une quelconque des revendications 1 ou 3 à 6, le deuxième module d'entraînement comprenant un deuxième bras d'entraînement thermoélectrique (70), le deuxième bras d' entraînement thermoélectrique (70) étant lié entre le cadre interne (20) et la lentille (30), une extrémité qui est celle du deuxième bras d'entraînement thermoélectrique (70) et qui est liée au cadre interne (20) étant une deuxième extrémité d'électrode (72), et un centre de la deuxième extrémité d'électrode (72) étant situé sur une ligne de prolongement du deuxième axe de rotation (A2).

8. Structure de micromiroir selon la revendication 7, le deuxième module d'entraînement comprenant en outre une deuxième électrode (90), la deuxième électrode (90) étant agencée sur le cadre externe (10), et la deuxième électrode (90) étant liée électriquement à la deuxième extrémité d'électrode (72).

9. Structure de micromiroir selon la revendication 8, la deuxième électrode (90) étant liée électriquement à la deuxième extrémité d'électrode (72) au moyen de conducteurs, et les conducteurs s'étendant depuis le cadre externe (10) jusqu'à l'une des deuxièmes charnières (50), et s'étendant jusqu'à la deuxième extrémité d'électrode (72) le long de la deuxième charnière (50).

10. Structure de micromiroir selon la revendication 6, une extrémité qui est celle du deuxième bras d'entraînement thermoélectrique (70) et qui est liée à la lentille (30) étant une deuxième extrémité de liaison (71), et un centre de la deuxième extrémité de liaison (71) étant situé sur le deuxième axe de rotation (A2).

11. Structure de micromiroir selon la revendication 10, au moins deux deuxièmes extrémités de liaison (71) étant prévues, et les au moins deux deuxièmes extrémités de liaison (71) étant réparties symétriquement avec pour centre le deuxième axe de rotation (A2), de sorte qu'un centre des deuxièmes extrémités de liaison (71) est situé sur le deuxième axe de rotation (A2).

12. Structure de micromiroir selon la revendication 11, le deuxième bras d'entraînement thermoélectrique (70) comprenant au moins deux deuxième bras élastiques (73), des extrémités de tous les deuxièmes bras élastiques (73) étant toutes liées à la deuxième extrémité d'électrode (72), et les autres extrémités des au moins deux bras élastiques (73) étant liées aux au moins deux deuxièmes extrémités de liaison (72) selon une correspondance biunivoque.

13. Structure de micromiroir selon la revendication 1, le cadre interne (20) étant doté d'une structure axisymétrique, et le premier axe de rotation (A1) et le deuxième axe de rotation (A2) formant tous deux des axes de symétrie du cadre interne (20).

14. Puce à réseaux de micromiroirs, comprenant une pluralité de structures de micromiroir, réparties en réseaux, selon l'une quelconque des revendications 1 à 13.

15. Puce à réseaux de micromiroirs selon la revendication 14, la puce à réseaux de micromiroirs comprenant une pluralité de zones réparties en réseaux, la pluralité de zones réparties en réseaux comprenant une première zone et une deuxième zone adjacentes l'une à l'autre, une direction de répartition de la structure de micromiroir dans la première zone présentant une symétrie spéculaire par rapport à une direction de répartition de la structure de micromiroir dans la deuxième zone.4
